# EUROPEAN PATENT APPLICATION

(11) **EP 4 379 846 A1**
(43) Date of publication of application: **05.06.2024**
(21) Application number: 22849535.4
(22) Date of filing: 27.07.2022
(51) Int. Cl.: H01M 4/131, H01M 4/36, H01M 4/525, H01M 10/052, H01M 10/0566

(54) **POSITIVE ELECTRODE FOR SECONDARY BATTERIES, AND SECONDARY BATTERY**

(30) Priority: 29.07.2021 JP 2021124313
(71) Applicant: Panasonic Intellectual Property Management Co., Ltd., Kadoma-shi, Osaka 571-0057 (JP)
(72) Inventor: ASAKA, Keisuke, Kadoma-shi, Osaka 571-0057 (JP); SAKATA, Motohiro, Kadoma-shi, Osaka 571-0057 (JP)
(74) Representative: Novagraaf International SA
(86) International application number: PCT/JP2022/028921
(87) International publication number: WO 2023/008474

(57) **Abstract**

A positive electrode for a secondary battery including a positive electrode current collector, and a positive electrode mixture layer provided on a surface of the positive electrode current collector, wherein the positive electrode mixture layer includes first positive electrode active material particles having a first average particle size D1 and second positive electrode active material particles having a second average particle size D2, D1 > D2 is satisfied, and D1 is 10 µm or more, when dividing the positive electrode mixture layer into a first region and a second region having the same thickness, the second positive electrode active material particles are included more in the second region than in the first region, the first region is nearer to the positive electrode current collector than the second region, 50% or more of the surface of the positive electrode current collector is a pressed-in region in which the first positive electrode active material particles are pressed in, and the pressed-in region is a region where the first positive electrode active material particles are pressed in to a depth of 10% or more of D1.

## Description

### [Technical Field]

The present disclosure relates to a positive electrode for a secondary battery and a secondary battery.

### [Background Art]

Secondary batteries, particularly lithium ion secondary batteries, are expected as a power source for small consumer applications, power storage devices, and electric vehicles, because of their high output and high energy density.

Patent Literature 1 proposes a positive electrode plate that can ensure a battery capacity while keeping the diffusion resistance of lithium ions to low when a positive electrode is used in a lithium ion secondary battery: the positive electrode plate includes a metal foil having a first main surface and a second main surface, and a laminate active material layer, in which a plurality of positive electrode active material layers are laminated, the positive electrode active material layer being formed on at least any of the above-described first main surface and the second main surface, and containing positive electrode active material particles composed of a lithium compound, wherein seen in the lamination direction of the above-described laminate active material layer, the above-described positive electrode active material particle content is uniform, and the smaller the average particle size of the positive electrode active material particles in the above-described positive electrode active material layer is, the upper the positive electrode active material layer is disposed.

### [Citation List]

### [Patent Literature]

[PLT 1]
Japanese Unexamined Patent Publication No. 2009-026599

### [Summary of Invention]

### [Technical Problem]

As in Patent Literature 1, decreasing the diffusion resistance of ions allows a secondary battery to have a high output, but it is not enough to decrease the internal resistance of the secondary battery. The tendency becomes obvious as the positive electrode thickness is increased to increase the energy density of the secondary battery. However, in view of improving charge and discharge cycle characteristics, it is desired to decrease the internal resistance as much as possible.

### [Solution to Problem]

An aspect of the present disclosure relates to a positive electrode for a secondary battery including: a positive electrode current collector, and a positive electrode mixture layer provided on a surface of the positive electrode current collector, wherein the positive electrode mixture layer includes first positive electrode active material particles having a first average particle size D1 and second positive electrode active material particles having a second average particle size D2, D1 > D2 is satisfied, and D1 is 10 µm or more, when dividing the positive electrode mixture layer into a first region and a second region having the same thickness, the second positive electrode active material particles are included more in the second region than in the first region, the first region is nearer to the positive electrode current collector than the second region, 50% or more of the surface of the positive electrode current collector is a pressed-in region in which the first positive electrode active material particles are pressed in, and the pressed-in region is a region where the first positive electrode active material particles are pressed in to a depth of 10% or more of D1.

Another aspect of the present disclosure relates to a secondary battery including the above-described positive electrode for a secondary battery, a separator, a negative electrode facing the positive electrode with the separator interposed therebetween, and a liquid electrolyte.

### [Advantageous Effects of Invention]

The present disclosure can realize a secondary battery that has a high output and is advantageous for a higher capacity and improvement in charge and discharge cycle characteristics.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a cross sectional view schematically illustrating a structure of a positive electrode in an embodiment of the present disclosure.
[FIG. 2] FIG. 2 is a cross sectional view schematically illustrating a structure of a positive electrode in another embodiment of the present disclosure.
[FIG. 3] FIG. 3 is a partially cutaway schematic oblique view of a secondary battery in an embodiment of the present disclosure.

### [Description of Embodiments]

In the following, examples are illustrated for embodiments of the present disclosure, but the present disclosure is not limited to the examples below. In the description below, specific numeral values and materials are given as examples, but other numeral values and materials can be used as long as effects of the present disclosure can be achieved. In this specification, "numeral value A to numeral value B" includes the numeral value A and numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

In the description below, "contain ..." or "be composed of..." includes "comprise(or include)", "be substantially consisting of..." and "be consisting of..".

The secondary battery includes nonaqueous electrolyte secondary batteries including at least lithium ion batteries and lithium metal secondary batteries.

A positive electrode for a secondary battery of the embodiment of the present disclosure includes a positive electrode current collector and a positive electrode mixture layer provided on a surface of the positive electrode current collector. The positive electrode current collector is composed of a sheet conductive material. The positive electrode mixture layer is supported on one or both surfaces of the positive electrode current collector. The positive electrode mixture layer is generally a layer (including a membrane or a film) composed of a positive electrode mixture. The positive electrode mixture includes a positive electrode active material as an essential component.

The positive electrode mixture layer includes first positive electrode active material particles having a first average particle size D1 and second positive electrode active material particles having a second average particle size D2. D1 and D2 can be measured from cross sections in the thickness direction obtained by cutting the positive electrode mixture layer and the positive electrode current collector together. The cross sections can be obtained by using a cross section polisher (CP). At that time, a thermosetting resin may be charged into the positive electrode mixture layer to be cured. Then, a scanning electron microscopic image (hereinafter, SEM image) of cross sections are captured. The SEM images are captured so that 10 or more of each of the first positive electrode active material particles and the second positive electrode active material particles are observed. The first equivalent circle diameter of cross sections of 10 or more first positive electrode active material particles are obtained by image processing, and D1 is determined as their average value. The second equivalent circle diameter of cross sections of 10 or more second positive electrode active material particles are obtained by image processing, and D2 is determined as their average value. Here, the equivalent circle diameter means a diameter of a circle having the same area as the area (area of particles observed in cross sections of the positive electrode mixture layer) of the cross sections of the particles.

When the first positive electrode active material particles and the second positive electrode active material particles can be collected separately from the positive electrode mixture layer, the median diameter (particle size at cumulative volume 50%) in the volume-based particle size distribution of the first positive electrode active material particles and the second positive electrode active material particles can be determined as D1 and D2. The volume-based particle size distribution can be measured by a laser diffraction scattering method. For example, "LA-750" manufactured by Horiba Corporation can be used as the measuring device.

The first positive electrode active material particles and the second positive electrode active material particles may be the same kind or different kinds. For example, the first positive electrode active material particles and the second positive electrode active material particles may be formed of compounds having different average particle sizes but the same chemical structure or composition.

D1 and D2 satisfy D1 > D2, and D1 is 10 µm or more. The first positive electrode active material particles with D1 of 10 µm or more are dense, hardly deteriorate, and are advantageous for achieving a higher capacity. Meanwhile, the second positive electrode active material particles satisfying D1 > D2 have a large surface area, and are advantageous for achieving a higher output. By using the first positive electrode active material particles and the second positive electrode active material particles in combination, the balance between the capacity and the output can be easily controlled. D1 may be 11 µm or more, 12 µm or more, or 15 µm or more. In view of ensuring a uniform reactivity, D1 may be 30 µm or less, or 25 µm or less.

When the positive electrode mixture layer is divided into a first region and a second region (where the first region is nearer to the positive electrode current collector than the second region) having the same thickness, the second positive electrode active material particles are included more in the second region than in the first region. That is, the mass of the second positive electrode active material particles included per unit volume in the second region is larger than the mass of the second positive electrode active material particles included per unit volume in the first region.

In other words, at the interface side of the positive electrode current collector and the positive electrode mixture layer, the presence ratio of the first positive electrode active material particles is large, and at the surface side of the positive electrode mixture layer, the presence ratio of the first positive electrode active material particles is small. That is, at the interface side between the positive electrode current collector and the positive electrode mixture layer, the presence ratio of the second positive electrode active material particles is small, and at the surface side of the positive electrode mixture layer, the presence ratio of the second positive electrode active material particles is large.

The second region may not substantially include the first positive electrode active material particles, and the second region may include the first positive electrode active material particles and the second positive electrode active material particles in a mixed state. In view of achieving a higher capacity, the second region preferably includes the first positive electrode active material particles. This is because the second positive electrode active material particles with small particle sizes are charged to fill the gaps formed between the first positive electrode active material particles with large particle sizes. However, the first positive electrode active material particles are preferably included more in the first region than in the second region. That is, the mass of the first positive electrode active material particles included per unit volume in the first region is preferably larger than the mass of the first positive electrode active material particles included per unit volume in the second region.

The first region does not have to substantially include the second positive electrode active material particles, but the region in the first region near the second region may include the second active material. In view of achieving a higher capacity, the region in the first region near the second region preferably includes the second positive electrode active material particles, or may include the first positive electrode active material particles and the second positive electrode active material particles in a mixed state.

When enhancing the effects of achieving a higher capacity by sufficiently filling the gaps formed between the first positive electrode active material particles having large particle sizes with the second positive electrode active material particles having small particle sizes, the D1/D2 ratio may be, for example, 2 or more and 6 or less, or 3 or more and 5 or less.

D2 may be less than 10 µm, or may be 8 µm or less, 6 µm or less, or 5 µm or less. In view of the effects of achieving a higher capacity and improving charge and discharge cycle characteristics, D2 may be 1 µm or more, or 3 µm or more.

In the region of the first region nearest to the positive electrode current collector, the small presence ratio of the second positive electrode active material particles with small particle sizes allows the first positive electrode active material with large particle sizes to be easily pressed into the positive electrode current collector. That is, the positive electrode current collector surface has a sufficient pressed-in region where the first positive electrode active material particles are pressed in. The pressed-in region improves current collecting properties of the positive electrode, and as a result, contributes to improvement in charge and discharge cycle characteristics of the secondary battery. In the pressed-in region, the first positive electrode active material particles with large particle sizes enter into the positive electrode current collector, and the positive electrode current collector is plastically deformed in correspondence with the shape of the particles. Therefore, the contact area between the first positive electrode active material particles and the positive electrode current collector is large, and the bonding strength between the positive electrode mixture layer and the positive electrode current collector is high. As a result, the electrical conductivity and load characteristics of the positive electrode improve, deterioration of the positive electrode is suppressed, and charge and discharge cycle characteristics significantly improve. Of the first region, the region nearest to the positive electrode current collector does not have to substantially include the second positive electrode active material particles.

The region nearest to the positive electrode current collector of the first region means, for example, a border region from the positive electrode current collector surface to a thickness of 2 × D1. The border region preferably includes the first positive electrode active material particles with large particle sizes as much as possible. At the border region, the volume ratio of the first positive electrode active material particles having an equivalent circle diameter of D1 or more relative to the total of the first positive electrode active material particles and the second positive electrode active material particles may be 50% or more, 60% or more, 70% or more, or 80% or more. Here, the area ratio can be regarded as the volume ratio of the first positive electrode active material particles each having an equivalent circle diameter of D1 or more relative to the total of the first positive electrode active material particles and the second positive electrode active material particles at the border region in a cross section in the thickness direction obtained by cutting the positive electrode mixture layer and the positive electrode current collector together. When counting the area of the first positive electrode active material particles, not only the first positive electrode active material particles and the second positive electrode active material particles included in the border region from the positive electrode current collector surface to the thickness of 2 × D1, but also the area of the portion of the first positive electrode active material particles embedded in the positive electrode current collector is counted.

Also, in the first region with a small presence ratio of the second positive electrode active material particles, many large gaps are formed between the first positive electrode active material particles. The first region may have a porosity larger than the porosity of the second region. In this case, liquid flowability (ion transportation) at a deep portion near the positive electrode current collector of the positive electrode mixture layer is improved. The improvement in liquid flowability further accelerates enhancement of high output and improvement in charge and discharge cycle characteristics of the secondary battery.

Having a sufficient pressed-in region means, in the cross section in the thickness direction obtained by cutting the positive electrode mixture layer and the positive electrode current collector together, 50% or more of the positive electrode current collector surface is the pressed-in region. However, the pressed-in region is a region where the first positive electrode active material particles are pressed in to a depth of 10% or more of D1. The depth means a distance from the positive electrode current collector surface to the portions of the first positive electrode active material particles embedded in the positive electrode current collector. The ratio of the pressed-in region can be determined as follows.

First, in the cross section in the thickness direction obtained by cutting the positive electrode mixture layer and the positive electrode current collector together, a first reference line is drawn, representing a level of the positive electrode current collector surface not plastically deformed. Also, a second reference line is drawn, distant from the first reference line by a distance of D1/10, so as to cross the cross section of the first positive electrode active material particles and the positive electrode current collector. The second reference line should be a length L of 100 µm or more. The ratio of the total length Lp of the line segments crossing the first positive electrode active material particles relative to the length L of the second reference line is the ratio of the pressed-in region. Setting the total length of the line segments crossing the cross section of the positive electrode current collector as Lc, L = Lp+ Lc.

The positive electrode mixture layer may have a thickness of, per one side of the positive electrode current collector, 80 µm or more, or 100 µm or more. To achieve a higher capacity in the secondary battery, the thickness of the positive electrode mixture layer is preferably large as much as possible. Meanwhile, generally, the thicker the positive electrode mixture layer, the more easily output characteristics and load characteristics deteriorate, and easily charge and discharge cycle characteristics deteriorate. In this embodiment, as described above, by disposing the first positive electrode active material particles and the second positive electrode active material particles, and providing the pressed-in region on 50% or more of the positive electrode current collector surface, even when a thick positive electrode mixture layer such as the above-described one is provided, a secondary battery with a high output and excellent load characteristics and charge and discharge cycle characteristics can be produced. The upper limit of the positive electrode mixture layer thickness is, for example, about 300 µm per one side of the positive electrode current collector, but it is not limited thereto.

The positive electrode mixture layer may be a multilayer structure, with a first layer and one or more other layers having different configurations. When the first layer is the nearest to the positive electrode current collector, the first layer may have a thickness of 10 µm or more and 40 µm or less, or 10 µm or more and 30 µm or less. The first layer may include a border region from the positive electrode current collector surface to the thickness of 2 × D1. Alternatively, the border region from the positive electrode current collector to the thickness of 2 × D1 may include the first layer. The different configurations may be exemplified by the case having the positive electrode active materials having different particle sizes, and the case having different kinds or different compositions of the positive electrode active materials. The positive electrode mixture layer having a multilayer structure with a first layer and one or more other layers with different configurations can be confirmed easily by observing the cross section in the thickness direction obtained by cutting the positive electrode mixture layer and the positive electrode current collector together.

The first layer or the border region may be, for example, a layer including substantially only the first positive electrode active material particles as the positive electrode active material, or a layer where 80 mass% or more of the positive electrode active material is the first positive electrode active material particles.

The second layer may be, for example, a layer including substantially only the second positive electrode active material particles as the positive electrode active material, or may be a layer including a mixture of the first positive electrode active material particles and the second positive electrode active material particles as the positive electrode active material. In the mixture of the first positive electrode active material particles and the second positive electrode active material particles, for example, 20 mass% or more, or even 40 mass% or more, or 50 mass% or more is the second positive electrode active material particles, and the remainder may be the first positive electrode active material particles.

The first positive electrode active material particles may include a first lithium transition metal composite oxide including Ni. The first lithium transition metal composite oxide may be a lithium transition metal composite oxide including lithium and Ni and having a layered rock salt type crystal structure. The Ni ratio in the metal elements other than Li included in the first lithium transition metal composite oxide may be 50 atom% or more. The first lithium transition metal composite oxide may include Co, but in view of lowering cost and increasing capacity, the Co ratio in the metal elements other than Li included in the first lithium transition metal composite oxide is preferably 0 atom% or more and 20 atom% or less, more preferably 0 atom% or more and 15 atom% or less. Co is considered to increase electrical conductivity of the positive electrode active material particles. By allowing the first positive electrode active material particles including Co to be pressed into the positive electrode current collector surface, current collecting properties of the positive electrode can be further improved.

The second positive electrode active material particles may include a second lithium transition metal composite oxide including Ni. The second lithium transition metal composite oxide may be a lithium transition metal composite oxide including lithium and Ni and having a layered rock salt type crystal structure. The Ni ratio in the metal elements other than Li included in the second lithium transition metal composite oxide may be 50 atom% or more. The second lithium transition metal composite oxide may include Co, but in view of lowering cost and increasing capacity, the Co ratio in the metal elements other than Li included in the second lithium transition metal composite oxide is preferably 0 atom% or more and 10 atom% or less, more preferably 0 atom% or more and 5 atom% or less.

Generally, the crystal structure of the lithium transition metal composite oxide in which the Ni ratio in the metal elements other than Li is 50 atom% or more is considered to be susceptible to changes along with repetitive charge and discharge, and the resistance easily becomes high. In this embodiment, by disposing the first positive electrode active material particles and the second positive electrode active material particles as described above, and providing the pressed-in region on 50% or more of the positive electrode current collector surface, even when the lithium transition metal composite oxide that easily becomes high resistance is used, a secondary battery with a high output, excellent load characteristics, and excellent charge and discharge cycle characteristics can be produced.

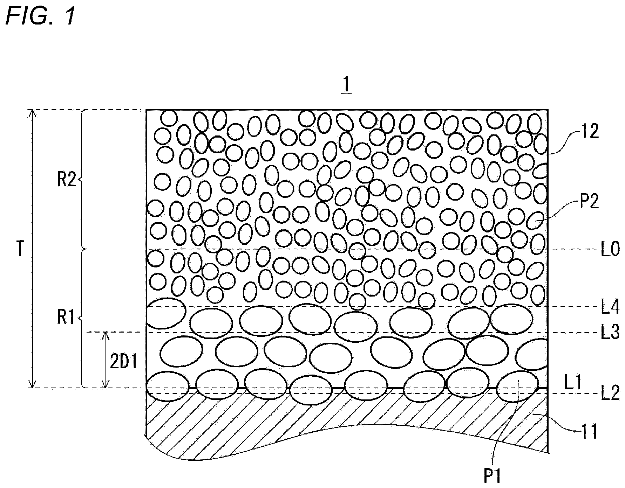

FIG. 1 is a cross sectional view schematically illustrating a structure of a positive electrode for a secondary battery of this embodiment. A positive electrode 10 includes a positive electrode current collector 11, and a positive electrode mixture layer 12 provided on the surface of the positive electrode current collector 11. FIG. 1 shows a part of a cross section in the thickness direction obtained by cutting the positive electrode mixture layer 12 and the positive electrode current collector 11 together. The positive electrode mixture layer 12 may be formed on both main surfaces of the positive electrode current collector 11. In FIG. 1, a portion of the positive electrode current collector 11 on one main surface side, and a portion of the positive electrode mixture layer 12 formed on the main surface are shown, and the other main surface side of the positive electrode current collector 11 is not shown.

The positive electrode mixture layer 12 includes first positive electrode active material particles P1 having a first average particle size D1 and second positive electrode active material particles P2 having a second average particle size D2. D1 and D2 satisfy D1 > D2 and D1 satisfies 10 µm or more, and the ratio D1/D2 is in a range of 2 or more and 6 or less. The positive electrode mixture layer 12 has a thickness T of, for example, 80 µm or more.

Line L0 divides the positive electrode mixture layer 12 into a first region R1 and a second region R2 having the same thickness. The first region R1 is a region that is nearer to the positive electrode current collector 11 than the second region R2. The second positive electrode active material particles P2 are included more in the second region R2 than in the first region R1. The first positive electrode active material particles P1 are not included in the second region R2, but included only in the first region R1.

Line L 1 is a first reference line, representing a level of the positive electrode current collector 11 surface not plastically deformed. Line L2 is a second reference line distant from the first reference line by a distance of D1/10, and is drawn so as to cross the cross section of the first positive electrode active material particles P1 and the positive electrode current collector 11. The second reference line has a length L set to 100 µm or more. In the second reference line, the line segments shown with the broken line are line segments crossing the first positive electrode active material particles P1, and their total length is Lp. In the second reference line, the line segments shown with the solid line are line segments crossing the cross section of the positive electrode current collector 11, and their total length is Lc. The ratio of Lp relative to L is the ratio of the pressed-in region, and L = Lp+ Lc is satisfied. The ratio of the pressed-in region where the first positive electrode active material particles P1 are pressed in significantly exceeds 50% of the positive electrode current collector 11 surface.

Line L3 is a third reference line distant from the positive electrode current collector 11 (that is, the first reference line) surface to the second region R2 side by a distance of 2 × D1, and the region sandwiched between the first reference line and the third reference line is the border region. The border region greatly affects the formation process of the pressed-in region and liquid flowability. The border region is included in the first region R1, and substantially occupied only with the first positive electrode active material particles P1. That is, the volume ratio of the first positive electrode active material particles P1 having an equivalent circle diameter of D1 or more relative to the total of the first positive electrode active material particles P1 and the second positive electrode active material particles is 100%. The more the first positive electrode active material particles P1 with large particle sizes are present in the border region, the more the pressure works effectively when pressing the first positive electrode active material particles P1 into the positive electrode current collector 11 without being dispersed, and therefore the ratio of the pressed-in region can be made significantly large. In the border region, compared with the second region R2, many gaps with large sizes that significantly improve liquid flowability are present. The first region R1 may have a porosity larger than the porosity of the second region R2.

Line L4 is a fourth reference line representing a boundary between the first layer and the second layer included in the positive electrode mixture layer 12 with different configurations from each other. The fourth reference line may be, for example, a line furthest from the positive electrode current collector 11 surface, with a total length of line segments crossing the first positive electrode active material particles P1 being 20% or less. The boundary (fourth reference line) between the first layer and the second layer can be confirmed more clearly by the positive electrode mixture layer cross sectional observation. The first layer preferably has a thickness of a half or less (thickness of the first region R1 or less) of the thickness T of the positive electrode mixture layer 12, may be in the range of 10 µm or more and 40 µm or less, or may be thicker than the border region having a thickness of 2 × D1.

FIG. 1 shows the positive electrode mixture layer 12 with a two-layer structure of a first layer and a second layer, but one or more layers of other configurations may further be interposed between the first layer and the second layer. Also, one or more layers of another configuration that is further distant from the positive electrode current collector 11 than the second layer may be present. However, a design is made so that the more the distance from the positive electrode current collector 11, the smaller the average particle size of the positive electrode active material particles included in that layer.

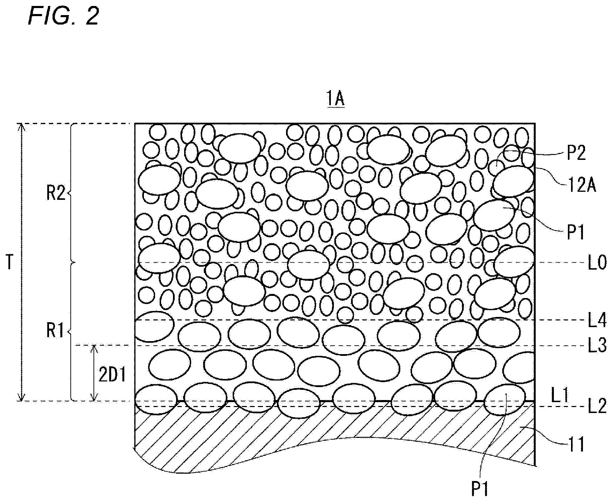

FIG. 2 is a cross sectional view schematically illustrating a structure of a positive electrode for a secondary battery in another embodiment. A positive electrode 10A includes a positive electrode current collector 11, and a positive electrode mixture layer 12A provided on the positive electrode current collector 11 surface. The positive electrode mixture layer 12 includes first positive electrode active material particles P1 having a first average particle size D1 and second positive electrode active material particles P2 having a second average particle size D2, D1 > D2 and D1 is 10 µm or more are satisfied.

In FIG. 2, the second region R2 or the second layer includes the first positive electrode active material particles P1 and the second positive electrode active material particles P2 in a mixed state. In such a second region R2, the second positive electrode active material particles P2 are charged so as to fill the gaps formed between the first positive electrode active material particles P1, and therefore it is advantageous for a higher capacity. The positive electrode 10A shown in FIG. 2 has the same configuration as that of the positive electrode 10 shown in FIG. 1, except that the configuration of the second region R2 is different.

Next, a secondary battery of the embodiment of the present disclosure is described. The secondary battery has, for example, the above-described positive electrode, a separator, and a negative electrode facing the positive electrode with the separator interposed therebetween, and a liquid electrolyte.

### [Positive electrode]

The positive electrode has a positive electrode current collector and a positive electrode mixture layer formed on a surface of the positive electrode current collector and including a positive electrode active material. The positive electrode active material layer includes the positive electrode active material as an essential component, and may include a binder, a conductive agent, and the like as optional components. For the binder, the conductive agent, and the thickener, known materials can be used.

The positive electrode active material includes, as described above, first positive electrode active material particles having a first average particle size D1, and second positive electrode active material particles having a second average particle size D2. The positive electrode active material may include another one or more kinds of positive electrode active material particles, in addition to the first positive electrode active material particles and the second positive electrode active material particles, but preferably 70 mass% or more, or 90 mass% or more of the positive electrode active material is the first positive electrode active material particles and the second positive electrode active material particles in total.

When the positive electrode mixture layer includes the above described first layer and the second layer, the first layer and the second layer preferably occupy 70 mass% or more, or may occupy 90 mass% or more of the positive electrode mixture layer. The first layer is formed by a method including a process of, for example, applying a first positive electrode slurry, in which a first positive electrode mixture including first positive electrode active material particles, a binder, and the like is dispersed in a dispersion medium, onto a surface of the positive electrode current collector. The second layer is formed by a method including a process of, for example, applying a second positive electrode slurry, in which a second positive electrode mixture including second positive electrode active material particles, a binder, and the like dispersed in a dispersion medium, onto a surface of the first positive electrode slurry. The dried laminated film may be rolled, if necessary. The first positive electrode slurry and the second positive electrode slurry may be applied onto the positive electrode current collector surface simultaneously using a two-fluid nozzle.

For the first positive electrode active material particles and the second positive electrode active material particles, as described above, the first or second lithium transition metal composite oxide (hereinafter, also referred to as a composite oxide N) including lithium and Ni, and having a layered rock salt type crystal structure may be used. Nickel is advantageous for a higher capacity and a lower cost. The ratio of Ni in the metal elements other than Li included in the composite oxide N may be 50 atom% or more, 68.5 atom% or more, 80 atom% or more, or 90 atom% or more.

The composite oxide N may be represented by, for example, a general formula: Li_{α}Ni_{1-x1-x2-y-z}Coₓ₁Mnₓ₂Al_{y}Me_{z}O_{2+β}. In the general formula, 0.95 ≤ α ≤ 1.05, 0 ≤ x1 ≤ 0.1, 0 ≤ x2 ≤ 0.5, 0 ≤ y ≤ 0.1, 0 ≤ z ≤ 0.1, 0.5 ≤ 1 -x1 -x2 -y -z and -0.05 ≤ β ≤ 0.05 are satisfied, and Me is an element other than Li, Ni, Mn, Al, Co, and oxygen. The value "α" indicating the molar ratio of lithium is increased or decreased by charging and discharging.

For Me, in view of stabilizing the crystal structure of the composite oxide N, at least one selected from the group consisting of Nb, Zr, B, Mg, Fe, Cu, Zn, Sn, Na, K, Ba, Sr, Ca, W, Mo, Si, Ti, Fe, and Cr can be used.

When the composite oxide N is used as the first lithium transition metal composite oxide, in view of improvement in load characteristics, x1 may satisfy 0 < x1 ≤ 0.1, or even may satisfy 0.005 ≤ x1 ≤ 0.015. Specific examples of such a composite oxide include a lithium-cobalt-aluminum composite oxide (e.g., LiNi_{0.8}Co_{0.15}Al_{0.05}O₂). Cobalt is advantageous for extending the life of a battery. Aluminum is advantageous for improvement of thermal stability.

When the composite oxide N is used as the first or second lithium transition metal composite oxide, in view of lowering cost and stabilizing the crystal structure, x2 may satisfy 0 < x2 ≤ 0.3, or even may satisfy 0.15 ≤ x2 ≤ 0.25. Specific examples of such a composite oxide include a lithium-nickel-manganese composite oxide (e.g., LiNi_{0.8}Mn_{0.2}O₂).

The shape and the thickness of the positive electrode current collector may be, for example, 5 µm or more and 20 µm or less. Examples of the material of the positive electrode current collector may be stainless steel, aluminum, an aluminum alloy, and titanium.

### [Negative electrode]

The negative electrode includes, for example, a negative electrode current collector, and may include a negative electrode active material layer formed on a surface of the negative electrode current collector. The negative electrode active material layer can be formed, for example, by applying a negative electrode slurry in which a negative electrode mixture including a negative electrode active material, a binder, and the like is dispersed in a dispersion medium on a surface of the negative electrode current collector and drying the slurry. The dried film may be rolled, if necessary. That is, the negative electrode active material layer can be a negative electrode mixture layer. A lithium metal foil or a lithium alloy foil may be attached to the negative electrode current collector as the negative electrode active material layer. The negative electrode active material layer may be formed on one surface of the negative electrode current collector, or may be formed on both surfaces thereof.

The negative electrode active material layer contains a negative electrode active material as an essential component, and as an optional component, a binder, a conductive agent, a thickener, and the like can be included. For the binder, the conductive agent, and the thickener, known materials can be used.

The negative electrode active material includes a material that electrochemically stores and releases lithium ions, a lithium metal, or a lithium alloy. For the material that electrochemically stores and releases lithium ions, a carbon material, an alloy-based material, and the like are used. Examples of the carbon material include graphite, graphitizable carbon (soft carbon), non-graphitizable carbon (hard carbon), and the like. Preferred among them is graphite, which is excellent in stability during charging and discharging and has small irreversible capacity. For the alloy-based material, a material containing at least one metal that forms an alloy with lithium can be used, and examples thereof include silicon, tin, a silicon alloy, a tin alloy, and a silicon compound. Silicon oxides or tin oxides including oxygen bonded thereto can be used.

For the alloy-based material containing silicon, for example, a silicon composite material in which a lithium ion conductive phase and silicon particles dispersed in the lithium ion conductive phase can be used. For the lithium ion conductive phase, for example, a silicon oxide phase, a silicate phase, a carbon phase, or the like can be used. A main component (e.g., 95 to 100 mass%) of the silicon oxide phase can be silicon dioxide. Among these, a composite material composed of a silicate phase and silicon particles dispersed in the silicate phase is preferable because it has a high capacity and a small irreversible capacity. In particular, the silicate phase containing lithium (hereinafter also referred to as a lithium silicate phase) is preferable because of its small irreversible capacity and high initial charge and discharge efficiency.

The lithium silicate phase may be any oxide phase containing lithium (Li), silicon (Si), and oxygen (O), and may include other elements. The atomic ratio of O to Si in the lithium silicate phase: O/Si is, for example, larger than 2 and less than 4. Preferably, O/Si is larger than 2 and less than 3. The atomic ratio of Li to Si in the lithium silicate phase: Li/Si is, for example, larger than 0 and less than 4. The lithium silicate phase may have a composition represented by the formula: Li_{2z}SiO_{2+z} (0 < z < 2). Preferably, the relation 0 < z < 1 is satisfied, and z=1/2 is more preferable. Examples of the elements other than Li, Si, and O that can be contained in the lithium silicate phase include iron (Fe), chromium (Cr), nickel (Ni), manganese (Mn), copper (Cu), molybdenum (Mo), zinc (Zn), aluminum (Al), etc.

The carbon phase may be composed of, for example, an amorphous carbon with less crystallinity. The amorphous carbon may be, for example, hard carbon, soft carbon, or something else.

For the negative electrode current collector, a non-porous conductive substrate (metal foil, etc.), a porous conductive substrate (mesh-body, net-body, punched sheet, etc.) is used. For the material of the negative electrode current collector, stainless steel, nickel, a nickel alloy, copper, and a copper alloy can be used.

### [Liquid electrolyte]

The liquid electrolyte includes a solvent and a solute dissolved in the solvent. The solute is an electrolytic salt that ionically dissociates in liquid electrolytes. The solute may include, for example, a lithium salt. The component of the liquid electrolyte other than the solvent and solute is additives. The liquid electrolyte may contain various additives.

For the solvent, an aqueous solvent or a nonaqueous solvent is used. For the nonaqueous solvent, for example, cyclic carbonate, chain carbonate, cyclic carboxylate, chain carboxylate, and the like are used. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), ethyl propionate (EP), and the like. The nonaqueous solvent may be used singly, or two or more kinds thereof may be used in combination.

Examples of the lithium salt include, a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN (C₂F₅SO₂)₂, etc.), a lithium halide (LiCl, LiBr, LiI, etc.) and the like. The lithium salt may be used singly, or two or more kinds thereof may be used in combination.

The liquid electrolyte may have a lithium salt concentration of 1 mol/liter or more and 2 mol/liter or less, or 1 mol/liter or more and 1.5 mol/liter or less. By adjusting the lithium salt concentration within the above-described range, a liquid electrolyte with excellent ion conductivity and suitable viscosity can be produced. However, the lithium salt concentration is not limited to the above-described range.

### [Separator]

It is desirable to interpose a separator between the positive electrode and the negative electrode. The separator is excellent in ion permeability and has suitable mechanical strength and electrically insulating properties. For the separator, a microporous thin film, a woven fabric, and a nonwoven fabric can be used. For the material of the separator, a polyolefin such as polypropylene or polyethylene is preferred.

In an example structure of the secondary battery, an electrode group and a liquid electrolyte are accommodated in an outer package, and the electrode group has a positive electrode and a negative electrode wound with a separator interposed therebetween. However, the structure is not limited thereto, and other forms of electrode groups may be used. For example, it can be a laminate electrode group, in which a positive electrode and a negative electrode are laminated with a separator interposed therebetween. The batteries may be of any form, for example, a cylindrical type, prismatic type, coin type, button type, laminated type, etc.

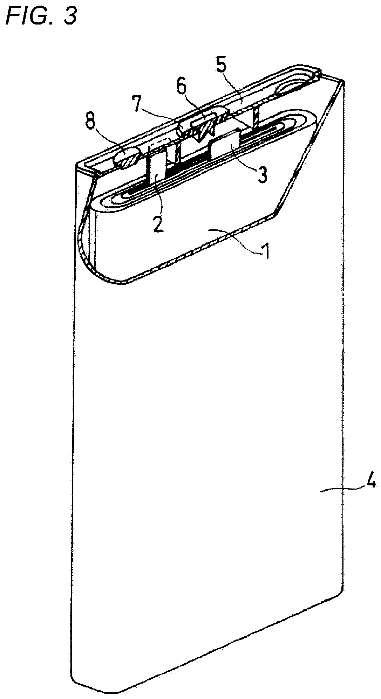

In the following, a structure of a prismatic nonaqueous secondary battery is described with reference to FIG. 3 as an example of the secondary battery of the present invention.

The battery includes a bottomed rectangular battery case 4 and an electrode group 1 and a liquid electrolyte (not shown) housed in the battery case 4. The electrode group 1 has a negative electrode in the form of a long strip, a positive electrode in the form of a long strip, and a separator interposed therebetween. A negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. A positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for a nonaqueous electrolyte, and is sealed with a sealing plug 8 after injection.

The present disclosure will be described in detail below with reference to Examples and Comparative Examples. The present disclosure, however, is not limited to the following Examples.

### <Example 1>

### [Positive electrode production]

Lithium transition metal composite oxides (lithium-nickel-manganese composite oxide (LiNi_{0.8}Mn_{0.2}O₂)) were prepared as first positive electrode active material particles and second positive electrode active material particles, each having different average particle sizes, and having a layered rock salt type crystal structure, and containing lithium and Ni.

The first and second positive electrode active material particles had D1 and D2 of 17 µm and 4 µm, respectively, measured by a laser diffraction scattering method as median diameters in a volume-based particle size distribution.

A first positive electrode slurry was prepared by mixing 100 parts by mass of the first positive electrode active material particles, 1.1 parts by mass of acetylene black, 0.9 parts by mass of polyvinylidene fluoride, and a suitable amount of N-methyl-2-pyrrolidone (NMP).

A second positive electrode slurry was prepared by mixing 100 parts by mass of the second positive electrode active material particles, 1.1 parts by mass of acetylene black, 0.9 parts by mass of polyvinylidene fluoride, and a suitable amount of NMP.

The first positive electrode slurry was applied on the surface of an aluminum foil as the positive electrode current collector, and the coating film was dried. Thereafter, the second positive electrode slurry was applied so as to cover the film of the first positive electrode slurry, and then the coating film was dried and rolled, thereby producing a positive electrode mixture layer having a first layer with a thickness of 40 µm and a second layer having a thickness of 40 µm on the aluminum foil. That is, the thickness of the first region R1 coincided with the thickness of the first layer, and the thickness of the second region R2 coincided with the thickness of the second layer. The first region R1 included only the first positive electrode active material particles P1, and the second region R2 included only the second positive electrode active material particles P2. The density of the positive electrode mixture layer as a whole after rolling was adjusted to be 3.45 g /cm³.

Using a cross section polisher (CP), a cross section is formed and an SEM image of the cross section was captured: the cross section in the thickness direction obtained by cutting the positive electrode mixture layer and the positive electrode current collector together. The average value of first equivalent circle diameters of ten or more first positive electrode active material particles were determined as D1, and the average value of second equivalent circle diameters of ten or more cross sections of the second positive electrode active material particles were determined as D2 with the above described method. As a result, the average values D1 and D2 substantially matched D1 and D2 (i.e., 17 µm and 4 µm) determined as a median diameter in the volume-based particle size distribution, respectively.

On the obtained cross section, a first reference line and a second reference line distant from the first reference line by a distance of D1/10 (= 1.7 µm) were drawn, and the ratio (pressed-in region ratio) of the total length Lp of the line segments crossing the first positive electrode active material particles P1 in the second reference line relative to the length L (= 120 µm) of the second reference line was determined with the above described method to be 83%.

Large gaps that greatly affect liquid flowability were observed in the border region sandwiched between the positive electrode current collector 11 surface (first reference line) and the third reference line distant from the first reference line to the second region R2 side by a distance of 2 × D1. In the border region, the volume ratio of the first positive electrode active material particles having an equivalent circle diameter of D1 or more relative to the total of the first positive electrode active material particles and the second positive electrode active material particles was 100%.

The positive electrode was cut into a predetermined shape to obtain a positive electrode for evaluation. The positive electrode had a region of 20 mm × 20 mm that works as the positive electrode, and a connection region of 5 mm × 5 mm for connection with a tab lead. Thereafter, the positive electrode mixture layer formed on the above-described connection region was scraped to expose the positive electrode current collector. Afterwards, the exposed portion of the positive electrode current collector was connected to the positive electrode tab lead and a predetermined region of the outer periphery of the positive electrode tab lead was covered with an insulating tab film.

### [Negative electrode production]

A negative electrode was produced by attaching a lithium metal foil (thickness 300 µm) on one side of an electrolytic copper foil as the negative electrode current collector.

The negative electrode was cut into the same shape as the positive electrode, and a negative electrode for evaluation was obtained. The lithium metal foil formed on the connection region formed in the same manner as the positive electrode was peeled off to expose the negative electrode current collector. Afterwards, the exposed portion of the negative electrode current collector was connected to the negative electrode tab lead in the same manner as the positive electrode, and a predetermined region of the outer periphery of the negative electrode tab lead was covered with an insulating tab film.

### [Liquid electrolyte preparation]

To a solvent mixture including ethylene carbonate (EC), ethyl methyl carbonate (EMC), and dimethyl carbonate (DMC) at a volume ratio of 4: 1: 15, LiPF₆ was added as a lithium salt, thereby preparing a liquid electrolyte. The concentration of LiPF₆ in the liquid electrolyte was set to 1.0 mol/liter.

### [Secondary battery production]

An evaluation cell was produced using the positive electrode and negative electrode for evaluation. First, the positive electrode and negative electrode were allowed to face each other with a separator interposed therebetween so that the positive electrode mixture layer overlapped with the lithium metal foil of the negative electrode, thereby producing an electrode group. Next, an Al laminate film (thickness 100 µm) cut into a size of 60 × 90 mm rectangle was folded into half, and the long side end of 60 mm was heat sealed at 230°C, to make it into an envelope of 60 × 45 mm. Afterwards, the produced electrode group was put into the envelope, and the end face of the Al laminate film and the position of the insulating tab films of the tab leads were aligned and heat sealed at 230°C. Next, 0.3 cm³ of the nonaqueous liquid electrolyte was injected from the not heat-sealed portion of the short side of the Al laminate film, and after the injection, they were allowed to stand for 5 minutes under a reduced pressure of 0.06 MPa to impregnate the electrode mixture layers with the liquid electrolyte. Lastly, the end face of the injected side of the Al laminate film was heat sealed at 230°C, thereby producing an evaluation battery Al. The evaluation battery was prepared in a dry air atmosphere having a dew point of -50°C or less.

### <Example 2>

A first positive electrode slurry including the first positive electrode active material particles and the second positive electrode active material particles was prepared by mixing 50 parts by mass of the first positive electrode active material particles, 50 parts by mass of the second positive electrode active material particles, 1.1 parts by mass of acetylene black, 0.9 parts by mass of polyvinylidene fluoride, and a suitable amount of NMP.

A positive electrode mixture layer having a first layer with a thickness of 40 µm and a second layer with a thickness of 40 µm on an aluminum foil was formed in the same manner as in Example 1, except that the first positive electrode slurry including the first positive electrode active material particles and the second positive electrode active material particles was used, thereby producing a positive electrode and a secondary battery (battery A2).

The density of the positive electrode mixture layer as a whole after rolling was adjusted to be 3.47 g /cm³. The ratio of the pressed-in region in the positive electrode was 81%.

### <Comparative Example 1>

A secondary battery (B1) was produced in the same manner as in Example 1, except that only the first slurry prepared in the same manner as in the first positive electrode slurry of Example 2 was applied, and a positive electrode having a positive electrode mixture layer having a thickness of 80 µm which is the same thickness as of Example 1 having the same theoretical capacity as in Example 1. The density of the positive electrode mixture layer as a whole after rolling was adjusted to be 3.47 g /cm³. The ratio of the pressed-in region in the produced positive electrode was 21%.

### <Comparative Example 2>

A positive electrode and a secondary battery (B2) were produced in the same manner as in Example 1, except for the following. The second positive electrode slurry prepared in the same manner as in Example 1 was first applied on the surface of an aluminum foil as the positive electrode current collector, and the coating film was dried. Thereafter, the first positive electrode slurry prepared in the same manner as in Example 1 was applied so as to cover the film of the second positive electrode slurry, and then the coating film was dried and rolled, to form a positive electrode mixture layer having a first layer with a thickness of 40 µm and a second layer with a thickness of 40 µm on the aluminum foil. That is, the distribution of the first positive electrode active material particles and the second positive electrode active material particles was opposite to that of Example 1. The ratio of the pressed-in region in the produced positive electrode was 39%.

### <Comparative Example 3>

A positive electrode and a secondary battery (B3) were produced in the same manner as in Example 1, except for the following. The first positive electrode slurry prepared in the same manner as in Example 1 was applied on the surface of an aluminum foil as the positive electrode current collector, and then the coating film was dried. Thereafter, the second positive electrode slurry prepared in the same manner as in Example 1 was applied so as to cover the film of the first positive electrode slurry, and then the coating film was dried and rolled, to form a positive electrode mixture layer having a first layer with a thickness of 40 µm and a second layer with a thickness of 40 µm on both sides of the aluminum foil. The rolling was performed twice with a reduced pressure so that the density of the positive electrode mixture layer as a whole after rolling was adjusted to be 3.46 g /cm³. The ratio of the pressed-in region in the produced positive electrode was 47%.

### [Evaluation]

### (Initial charge and discharge)

The produced batteries were sandwiched by a pair of 80 × 80 cm stainless steel (thickness 2 mm) clamps to be pressurized and fixed at 0.2 MPa. The batteries were allowed to stand in an environment of 25°C, constant current charging was performed at a current of 0.2 It until the voltage reached 4.3 V, and thereafter, constant voltage charging was performed at a constant voltage of 4.3 V until the electric current reached 0.05 It. Afterwards, constant current discharging was performed at a current of 0.2 It until the voltage reached 2.5 V to obtain an initial capacity C₀. Charging and discharging were performed in an environment of 25°C.

### (Capacity retention rate)

With the batteries allowed to stand for 20 minutes between charging and discharging, the charge and discharge were repeated 30 cycles in an environment of 25°C under the above-described charge and discharge conditions, and discharge capacity Ci at the 30th cycle was obtained. The ratio of the discharge capacity Ci to the initial discharge capacity C₀, R₁=C₁/C₀ was evaluated as capacity retention rate.

### (DCIR measurement)

The batteries after the initial charge and discharge test were allowed to stand in an environment of 25°C, and constant current charging was performed at a current of 0.2 It until the state of charge (SOC) became 50%. Afterwards, the batteries were allowed to stand for two hours, and the resistance value was determined from the voltage drop after 30 second discharge at a current of 0.3 It, regarding it as an initial DCIR.

Table 1 shows the evaluation results on the capacity retention rate R₁ and DCIR on batteries A1, A2, B1, B2, and B3. The values in Table 1 are relative values, setting the results of the battery B1 of Comparative Example 1 as 100. The higher the capacity retention rate R₁, the better, and the lower the DCIR, the better.

**[Table 1]**

| Battery | Positive electrode mixture layer density /[g/cm³] | Pressed-in region ratio /[%] | DCIR | R₁ |
|---|---|---|---|---|
| B1 | 3.47 | 21 | 100 | 100 |
| B2 | 3.46 | 39 | 148 | 87 |
| B3 | 3.46 | 47 | 155 | 89 |
| A1 | 3.45 | 83 | 86 | 107 |
| A2 | 3.47 | 81 | 90 | 105 |

As shown in Table 1, with the ratio of the pressed-in region of 50% or more (particularly 70% or more), not only the DCIR significantly decreased, but also the capacity retention rate significantly improved. In view of achieving a higher capacity, the positive electrode mixture layer of Comparative Example 1 is suitable. However, to achieve a high output and excellent charge and discharge cycle characteristics, in addition to achieving a higher capacity, it is important to allow the positive electrode active material particles with large particle sizes to be present abundantly in the first region R1 or the first layer, more than the second region R2 or the second layer. Such a structure is advantageous in significantly increasing the ratio of the pressed-in region, and also ensuring sufficient liquid flowability in the border region of the positive electrode current collector and the positive electrode mixture layer.

### [Industrial Applicability]

The secondary battery of the present disclosure can provide a secondary battery that has a high output, and that is advantageous for a higher capacity and improvement in charge and discharge cycle characteristics. The secondary battery of the present disclosure is useful for a main power source for mobile communication devices, electric vehicles, hybrid vehicles, and mobile electronic devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug, 10: positive electrode, 11: positive electrode current collector, 12: positive electrode mixture layer, P1: first positive electrode active material particles, P2: second positive electrode active material particles

## Claims

1. A positive electrode for a secondary battery comprising: a positive electrode current collector, and a positive electrode mixture layer provided on a surface of the positive electrode current collector, wherein
the positive electrode mixture layer includes first positive electrode active material particles having a first average particle size D1 and second positive electrode active material particles having a second average particle size D2,
D1 > D2 is satisfied, and D1 is 10 µm or more,
when dividing the positive electrode mixture layer into a first region and a second region having the same thickness, the second positive electrode active material particles are included more in the second region than in the first region,
the first region is nearer to the positive electrode current collector than the second region,
50% or more of the surface of the positive electrode current collector is a pressed-in region in which the first positive electrode active material particles are pressed in, and
the pressed-in region is a region where the first positive electrode active material particles are pressed in to a depth of 10% or more of D1.

2. The positive electrode for a secondary battery of claim 1, wherein the first positive electrode active material particles are included more in the first region than in the second region.

3. The positive electrode for a secondary battery of claim 1 or 2, wherein in a border region from the surface of the positive electrode current collector to a thickness of 2 × D1, a volume ratio of the first positive electrode active material particles having an equivalent circle diameter of D 1 or more relative to a total of the first positive electrode active material particles and the second positive electrode active material particles is 50% or more.

4. The positive electrode for a secondary battery of any one of claims 1 to 3, wherein a D1/D2 ratio is 2 or more and 6 or less.

5. The positive electrode for a secondary battery of any one of claims 1 to 4, wherein D2 is less than 10 µm.

6. The positive electrode for a secondary battery of any one of claims 1 to 5, wherein the positive electrode mixture layer has a thickness of 80 µm or more.

7. The positive electrode for a secondary battery of any one of claims 1 to 6, wherein when the positive electrode mixture layer is segmented into a first layer and a layer other than the first layer each having a different configuration and the first layer is nearest to the positive electrode current collector, the first layer has a thickness of 10 µm or more and 40 µm or less.

8. The positive electrode for a secondary battery of any one of claims 1 to 7, wherein the first positive electrode active material particles include a first lithium transition metal composite oxide including Ni,
in metal elements other than Li included in the first lithium transition metal composite oxide, a Ni ratio is 50 atom% or more,
the second positive electrode active material particles include a second lithium transition metal composite oxide including Ni, and
in metal elements other than Li included in the second lithium transition metal composite oxide, a Ni ratio is 50 atom% or more and a Co ratio is 0 atom% or more and 10 atom% or less.

9. A secondary battery comprising: the positive electrode for a secondary battery of any one of claims 1 to 8, a separator, a negative electrode facing the positive electrode with the separator interposed therebetween, and a liquid electrolyte.
